# EUROPÄISCHE PATENTANMELDUNG

(11) **EP 1 459 837 A1**
(43) Veröffentlichungstag der Anmeldung: **22.09.2004**
(21) Anmeldenummer: 03405199.5
(22) Anmeldetag: 21.03.2003
(51) Int. Cl.: B23Q 7/04, B25J 15/04, B25J 15/06

(54) **Rotierbarer Werkstückgreifer**

(71) Anmelder: Robert Seckler AG, 2542 Pieterlen (CH)
(72) Erfinder: Steiner, Stefan, 3294 Büren an der Aare (CH)
(74) Vertreter: Störzbach, Michael Andreas

(57) **Zusammenfassung**

Der Werkstückgreifer umfasst zur Aufnahme des Werkstücks (90) ein Rotationsteil (30, 50, 80), welches mit einer rotierenden Maschinenspindel mitrotierbar ist. Der Werkstückgreifer ermöglicht das Wechseln von Werkstücken bei rotierender Spindel.

## Beschreibung

Die vorliegende Erfindung bezieht sich auf einen Werkstückgreifer gemäss Oberbegriff des Anspruchs 1.

Zur rotativen Bearbeitung eines Werkstücks wird dieses in die Spindel einer Bearbeitungsmaschine, beispielsweise einer Schleifmaschine oder Drehmaschine, eingespannt und dann in Rotation versetzt. Nach der Bearbeitung wird die Spindel zusammen mit dem Werkstück zur Ruhe gebracht und dieses dann entnommen. Es sind Werkstückgreifer bekannt, die zum Be- bzw. Entladen eines Werkstücks bei ruhender Spindel geeignet sind. Das Abbremsen bzw. Anfahren der Spindel ist jedoch besonders bei der Bearbeitung von einer grösseren Anzahl von Werkstücken nachteilig, da jeweils eine relativ grosse Zeit zum Wechseln der Werkstücke benötigt wird.

Ausgehend von diesem Stand der Technik liegt eine Aufgabe der vorliegenden Erfindung darin, einen Werkstückgreifer anzugeben, mit welchem die Werkstückwechselzeit reduziert werden kann.

Diese Aufgabe wird durch einen Werkstückgreifer gemäss Anspruch 1 gelöst. Die weiteren Ansprüche geben weitere bevorzugte Ausführungen an.

Der Werkstückgreifer gemäss Anspruch 1 hat den Vorteil, dass Werkstücke bei rotierender Spindel einer Bearbeitungsmaschine gewechselt werden können und so die Werkstückwechselzeit reduziert werden kann.

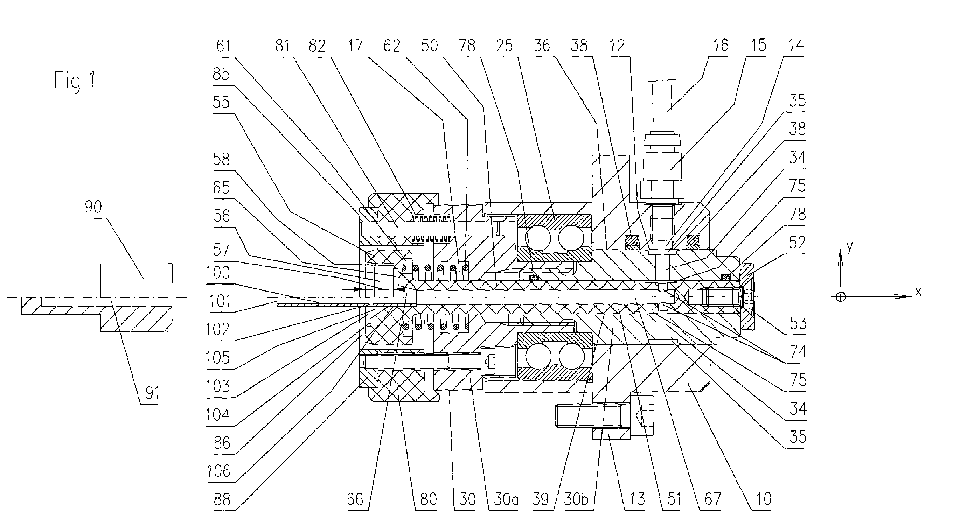

Die Erfindung wird im Folgenden anhand eines Ausführungsbeispiels erläutert unter Bezugnahme auf Figur 1, welche einen erfindungsgemässen Werkstückgreifer im Schnitt zeigt, wobei für den Kopf 55 bzw. 104 zur Aufnahme eines Werkstücks in der oberen und unteren Figurenhälfte zwei unterschiedliche Varianten dargestellt sind.

Der Werkstückgreifer umfasst ein stehendes Halteteil 10 und ein um die x-Achse rotierbares Rotationsteil 30. Das Halteteil 10 weist stirnseitig eine zylindrische Ausnehmung auf, in welche ein Kugellager 25 eingelassen ist und welche in eine zweite zylindrische Ausnehmung 12 übergeht. Das Halteteil 10 ist aussen mit Montageflanschen 13 versehen zum festen Verbinden des Werkstückgreifers mit einer Positioniervorrichtung z.B. mittels Schraubenverbindungen. Die Positioniervorrichtung kann beispielsweise ein Roboterarm oder eine sonstige gesteuerte Handhabungsvorrichtung sein.

Am hinteren Ende des Halteteils 10 ist eine durchgehende Bohrung 14 vorhanden, auf welche ein Anschlussstutzen 15 montiert ist. Dieser ist über eine Leitung 16 mit einem Unterdruckerzeuger, beispielsweise einer Vakuumpumpe oder einer Venturi-Düse, zur Erzeugung eines Luftdruckunterschieds verbindbar.

Das Rotationsteil 30 umfasst ein stirnseitiges sowie rückseitiges Teil 30a bzw. 30b, die miteinander verschraubt sind. Es ist auch denkbar, das Rotationsteil 30 einstückig herzustellen. Das rückseitige Teil 30b weist einen im Wesentlichen zylindrisch ausgebildeten Abschnitt auf, welcher durch die zweite Ausnehmung 12 des Halteteils 10 hindurchgeführt ist. Das Rotationsteil 30 ist etwa in seiner Mitte durch das Kugellager 25 radial gelagert. Es ist auch möglich, mehrere Kugellager zu verwenden zur Lagerung des Rotationsteils 30 an mehreren Stellen. Das Halteteil 10 kann stirnseitig z.B. noch mit einer Lippendichtung versehen sein zum Schutz des Kugellagers 25 vor dem Eindringen von beispielsweise Kühlmitteln, wie sie bei der Bearbeitung von Werkstücken zur Anwendung kommen.

Das Rotationsteil 30 ist mit durchgehenden Bohrungen 34 versehen, die im Wesentlichen in derselben Ebene liegen wie die Bohrung 14 des Halteteils 10, sowie mit einer ringförmigen Nut 35, welche die Eingangsöffnungen der Bohrungen 34 miteinander verbindet. Die Nut 35 ermöglicht auch während der Rotation des Rotationsteils 30 einen Lufttransport durch die Bohrungen 34 hindurch. Um dabei einen Luftaustauch mit der Umgebung durch den Spalt 36 hindurch zu unterbinden, welcher zwischen dem Teil 30b und dem Halteteil 10 gebildet ist, ist das Halteteil 10 auf beiden Seiten der Bohrung 14 mit Dichtmitteln 38 versehen, wie sie beispielsweise zum Abdichten von Wellen verwendet werden. Ist der Spalt 36 dünn genug gewählt, so wirkt dieser auch ohne die Dichtmittel 38 dichtend ("Spaltdichtung"). In Fig. 1 sind daher lediglich in der oberen Hälfte die Dichtmittel 38 eingezeichnet. Eine Spaltdichtung hat gegenüber den Dichtmitteln 38 den Vorteil, dass das rotierende Teil 30b und stehende Halteteil 10 nicht in Berührung kommen und daher das Rotationsteil 30 besonders leicht in Rotation versetzt werden kann.

In der Mitte des Rotationsteils 30 ist entlang seiner Rotationsachse eine durchgehende Öffnung 39 vorhanden, in welche die Hülse 51 eines Aufnahmeelements 50 zur Aufnahme eines Werkstücks 90 eingeführt ist. Das Aufnahmeelement 50 ist entlang der x-Achse axial verschiebbar gelagert, wobei auf dem rückseitigen Ende der Hülse 51 eine Anschlagscheibe 52 mittels einer Schraube 53 befestigt ist.

In der Fig. 1 sind zwei Varianten für den Kopf zur Aufnahme eines Werkstücks 90 gezeigt. Wie in der oberen Hälfte der Figur gezeigt, weist der Kopf 55 gemäss der ersten Variante eine Vertiefung 56 auf, dessen Innendurchmesser etwas grösser als der Aussendurchmesser des einen Endes des aufzunehmenden Werkstücks 90 ist. Typischerweise ist zwischen dem aufgenommenen Werkstück 90 und der Innenwand der Vertiefung 56 ein Spalt im Bereich von einigen Hundertstel Millimetern. Die Tiefe 57 der Vertiefung 56 ist so gewählt, dass ein in die vertiefung 56 bis zum Anschlag 58 eingeschobenes Werkstück 90 auch ohne weitere Haltemittel durch Verkanten gehalten wird. Etwa in der Mitte des Kopfes 55 befindet sich eine Eingangsöffnung 65, welche zuerst in einen etwas sich verjüngenden Abschnitt 66 und dann in einen Innenkanal 67 übergeht, der bis mindestens auf die Höhe der Nut 75 reicht.

Wie in der unteren Hälfte der Figur 1 gezeigt, weist der Kopf 104 gemäss der zweiten Variante einen Fortsatz z.B. in Form eines Dorns 100 auf, dessen vorderes Ende 101 in eine entsprechende Ausnehmung 91 des Werkstücks 90 hineingeführt werden kann. Das rückseitige Ende des Dorns 100 ist in eine Öffnung 106 des Aufnahmeelements 50 hineingedrückt. Der Kopf 104 weist eine Vertiefung 103 auf, in welche das Ende des Werkstücks 90 zu liegen kommt, um ein seitliches Verrutschen zu verhindern. Der Dorn 100 ist als Hülse ausgebildet, die etwa am Ende der Vertiefung 103 mit einer Bohrung 102 versehen ist. Dadurch ist ein Lufttransport durch die Bohrung 102 und den Dorn 100 hindurch zum Innenkanal 67 möglich. Im Bereich der Bohrung 102 ist der Kopf 104 mit einer Aussparung 105 versehen sein, um das Fixieren des Werkstücks 90 mittels Unterdruck zu unterstützen. Ist die Ausnehmung 91 des Werkstücks 90 nicht durchgehend ausgestaltet, so ist es auch möglich, das vordere Ende 101 des Dorns 100 offen zu lassen, um auch dort einen Unterdruck zum Festhalten des Werkstücks 90 erzeugen zu können. Das Ende 101 kann z.B. mit einem wegnehmbaren Stopfen versehen sein, um es je nach Anwendung öffnen bzw. schliessen zu können.

Da das Aufnahmeelement 50 durch Lösen der Schraube 53 auf einfache Weise ausgewechselt werden kann, können verschiedene Aufnahmeelemente 50 verwendet werden, bei denen Form und Dimensionen des Kopfes 55 bzw. 104, insbesondere der Vertiefung 56 bzw. des Dorns 100 entsprechend dem Teil des Werkstücks angepasst ist, auf welchen der Kopf 55 bzw. 104 aufgesetzt werden soll.

Die Unterseite des Kopfes 55 bzw. 104 weist eine ringförmige Nut 61 auf, in welcher das Ende einer Druckfeder 62 liegt. Das andere Ende der Druckfeder 62 liegt in einer Aussparung 17 im Rotationsteil 30.

Am Ende des Innenkanals 67 sind durchgehende Bohrungen 74 vorgesehen, die aussen an der Hülse 51 durch eine Nut 75 untereinander verbunden sind. Die Länge der Nut 75 entspricht in etwa dem möglichen Hub, mit dem sich das Aufnahmeelement 50 axial verschieben kann, sodass auch bei einer axialen Verschiebung des Aufnahmeelements 50 ein Lufttransport zwischen dem Innenkanal 67 und den Bohrungen 34 des Rotationsteils 30 durch die Bohrungen 74 hindurch möglich ist. Um dabei einen Lufttransport durch den Spalt zwischen Hülse 51 und Rotationsteil 30 hindurch nach aussen zu verhindern, kann die Hülse 51 noch mit Dichtungsringen 78 versehen sein. Ein Dichten mittels oben erwähnter Spaltdichtung ist auch möglich. In Fig. 1 sind daher lediglich in der oberen Hälfte die Dichtringe 78 eingezeichnet.

Aufgrund der Dichtmittel 38, 78 bzw. der Spaltdichtungen ist die Eingangsöffnung 65 im Kopf 55 des Aufnahmeelements 50 über den Anschlussstutzen 15 mit einem Unterdruckerzeuger durch einen nach aussen hin dichten Kanal verbindbar. Beim Anbringen des Aufnahmeelements 50 am Werkstück 90 wird ein Unterdruck erzeugt, sodass Luft durch die Öffnung 65 hineingesogen wird. Dies unterstützt nebst dem Verfahren des Werkstückgreifers in x-Richtung das Eintauchen des Werkstücks 90 in die Vertiefung 56. Ist das Werkstück 90 in diese eingedrungen, erhöht sich die Saugleistung des Unterdruckerzeugers bis zum maximal eingestellten Wert. Die Steuerung des Unterdruckerzeugers kann dabei durch einen Drucksensor erfolgen, der z.B. den Unterdruck in der Leitung 16 misst. Dabei wird die Tatsache ausgenutzt, dass der Unterdruck beim Aufsetzen des Kopfes 55 auf das Werkstück 90 stark ansteigt. Dieser vom Drucksensor gemessene Druckanstieg kann auch zur Anwesenheitskontrolle des Werkstücks 90 ausgewertet werden.

Beim Kopf 104 mit dem Dorn 100 ist die Eingangsöffnung 101 bzw. 102 über den Anschlussstutzen 15 mit einem Unterdruckerzeuger durch einen nach aussen hin dichten Kanal verbindbar. Analog wie oben beschrieben, kann dadurch ein Werkstück 90 durch Unterdruck fixiert werden.

Das Rotationsteil 30 ist stirnseitig durch Bolzen 81 und Druckfedern 82 mit einem Mitnehmer 80 verbunden. Dadurch ist der Mitnehmer 80 gegenüber dem Rotationsteil 30 axial entlang der Rotationsachse verschiebbar.

Die Stirnseite des Mitnehmers 80 ist mit einer ebenen Kontaktfläche 85 versehen, welche mit einer rotierenden Spindel einer Bearbeitungsmaschine z.B. im Bereich des Spannfutters in Kontakt gebracht werden kann und so aufgrund der Reibung ebenfalls in Rotation versetzbar ist.

Als Alternative kann das Halteteil 10 mit einem Motor versehen sein zum Antreiben des Rotationsteils 30. Es ist auch möglich, einen externen Antrieb mittels Übertragungsmitteln, z.B. einem Riemen, an das Rotationsteil 30 anzukoppeln, um es in Rotation versetzen zu können.

Wie Fig. 1 zeigt, ragt in der Ruhestellung des Werkzeuggreifers die Kontaktfläche 85 etwas über das vordere Ende des Kopfes 55 bzw. 104 des Aufnahmeelements 50 hinaus.

Die Kontaktfläche 85 ist mit einer Öffnung 86 versehen, sodass durch diese hindurch ein Werkstück 90 mit dem Aufnahmeelement 50 aufgenommen werden kann. Die Dimensionen der Kontaktfläche 85 bzw. des Mitnehmers 80 sind an die entsprechenden Abmessungen und Art der Spindel der Bearbeitungsmaschine angepasst. Es ist auch denkbar, den stirnseitigen Teil des Mitnehmers 80 als auswechselbares Adapterelement 88 auszubilden, das mit dem hinteren Teil des Mitnehmers 80 z.B. verschraubt ist. Dadurch wird ein Anpassen des Mitnehmers 80 an die jeweilige Spindel der Bearbeitungsmaschine erleichtert. Auch kann der Mitnehmer 80 bei Verschleiss an der Kontaktfläche 85 durch Einsetzen eines neuen Adapterelements 88 auf einfache Weise wieder in Stand gesetzt werden.

Als Materialien zur Herstellung der einzelnen Teil eignen sich z.B. Metalle, insbesondere Leichtmetalle bei den rotierbaren Teilen 30, 50, 80, oder auch Kunststoffe.

Zum Beladen einer rotierenden Spindel einer Bearbeitungsmaschine mit einem Werkstück 90 wird wie folgt verfahren:
Gegebenenfalls wird zuerst das zur Aufnahme des Werkstücks 90 passende Aufnahmeelement 50 in die Öffnung 39 des Rotationsteils 30 hineingeschoben und die Anschlagscheibe 52 festgeschraubt. Der Werkstückgreifer wird mittels der Positioniervorrichtung verfahren, so dass ein Werkstück 90 im Kopf 55 bzw. 104 aufgenommen werden kann. Dieses wird dann mittels dem im Innenkanal 67 erzeugten Unterdruck fixiert. Die Kontaktfläche 85 des Mitnehmers 80 wird mit der rotierenden Spindel der Bearbeitungsmaschine in Kontakt gebracht, sodass der Mitnehmer 80 aufgrund der auftretenden Reibung ähnlich wie bei einer Kupplung in Rotation versetzt wird. Dabei wird ebenfalls das Rotationsteil 30 sowie das Aufnahmeelement 50 zusammen mit dem Werkstück 90 mitgedreht. Dies deshalb, da die mit dem Aufnahmeelement 50 verbundene Anschlagscheibe 52 durch die Druckfeder 62 an das Rotationsteil 30b gedrückt wird. Ist das Rotationsteil 30 an einen Antrieb gekoppelt, so wird es mittels diesem entsprechend in Rotation versetzt.

Nach dem Kontakt zwischen Mitnehmer 80 und Spindel wird der Werkstückgreifer noch etwas weiter in Richtung der negativen x-Achse verschoben, so dass die Druckfedern 82 zusammengedrückt und das Rotationsteil 30 zusammen mit dem Aufnahmeelement 50 weiter gegen die Spindel geschoben werden. Während des Zusammendrückens der Druckfedern 82 bleibt dem Rotationsteil 30 genügend Zeit, seine Drehzahl an die der Spindel anzugleichen. Beim Vorschieben des Aufnahmeelements 50 gelangt das stirnseitige Ende des Werkstücks 90 in die entsprechende Öffnung der Spindel. Ist das Werkstück 90 darin schliesslich eingespannt, wird der Druck im Innenkanal 67 ausgeglichen, sodass das Werkstück 90 vom Kopf 55 bzw. 104 getrennt werden kann. Es ist auch denkbar, im Innenkanal 67 einen gewissen Überdruck zu erzeugen, um zu verhindern, dass z.B. Kühlmittel oder Späne hineingelangen können.

Die axiale Verschiebbarkeit des Aufnahmeelements 50 hat den Vorteil, dass dann, wenn z.B. das Werkstück 90 noch während des Verschiebens des Werkstückgreifers z.B. mit der Spindel in Kontakt kommt, diese zusätzliche Verschiebung durch Zusammendrücken der Druckfedern 62 ausgleichbar ist. Ausserdem ist das Aufnahmeelement 50 in der Öffnung 39 des Rotationsteils 30 rotierbar aufgenommen. Dadurch ist gewährleistet, dass falls das rotierende Werkstück 90 z.B. unbeabsichtigt mit einer weniger schnell rotierenden oder gar festen Fläche in Berührung kommt, die Relativbewegung ausgeglichen und so das Werkstück 90 nicht vom Aufnahmeelement 50 weggerissen wird.

Nach dem Entfernen des Werkstückgreifers von der Spindel, gehen der Mitnehmer 80 sowie das Aufnahmeelement 50 aufgrund der Druckfeder 82 bzw. 62 von selbst in die Ruhestellung zurück, wie sie in Fig. 1 gezeigt ist. Soll das Rotationsteil 30 rasch zum Stillstand gebracht werden, so wird dazu die Kontaktfläche 85 mit einer stehenden Fläche in Kontakt gebracht. Es ist jedoch auch möglich, noch während das Rotationsteil 30 am Rotieren ist, bereits ein neues Werkstück durch Ansaugen im Kopf 55 bzw. 104 aufzunehmen.

Das Entladen einer Spindel, in welchem ein Werkstück aufgenommen ist, geschieht ähnlich wie das Beladen, indem das Rotationsteil 30 in Rotation versetzt wird und dann das Werkstück im rotierenden Kopf 55 bzw. 104 des Aufnahmeelements 50 aufgenommen und durch Unterdruck festgehalten wird.

Der oben beschriebene Werkstückgreifer erlaubt es, die Werkstückwechselzeit erheblich zu reduzieren, zumal die rotierenden Teile aufgrund ihres relativ geringen Gewichts schneller beschleunigt werden können als üblicherweise die Spindel einer Bearbeitungsmaschine und das Abbremsen parallel zum Bearbeitungsprozess des Werkstücks stattfinden kann und somit nicht zeitkritisch ist. Dadurch kann die Produktivität erhöht werden. Zur weiteren Erhöhung der Produktivität ist es denkbar, zwei Werkstückgreifer der oben beschriebenen Art parallel einzusetzen. Dadurch ist es möglich, die Spindel mit dem ersten Werkstückgreifer zu entladen und sie sogleich mit dem zweiten Werkstückgreifer zu beladen.

Da die Drehzahl der Werkstückspindel während dem Werkstückwechsel beibehalten werden kann, wird auch ein bessere Genauigkeit bei der Bearbeitung sowie ein Betrieb unter konstanten thermischen Bedingungen gewährleistet. Die Verwendung von Unterdruck zur Fixierung des Werkstückes hat z.B. gegenüber Klemmvorrichtungen auch den Vorteil, dass die Oberfläche des Werkstück nicht verletzt wird.

## Patentansprüche

1. Werkstückgreifer zum Übergeben und/oder Entnehmen eines Werkstückes an bzw. von einer rotierenden Maschinenspindel, **gekennzeichnet durch** ein Rotationsteil (30, 50, 80) zur Aufnahme des Werkstücks (90), welches mit der Spindel mitrotierbar ist.

2. Greifer nach Anspruch 1, **dadurch gekennzeichnet, dass** das Rotationsteil einen Mitnehmer (80, 88) umfasst, welcher mit der Spindel verbindbar ist.

3. Greifer nach Anspruch 2, **dadurch gekennzeichnet, dass** der Mitnehmer (80, 88) entlang der Rotationsachse (x-Achse) des Rotationsteils verschiebbar gelagert ist und vorzugsweise mit Federmitteln (82) verbunden ist.

4. Greifer nach einem der Ansprüche 1 bis 3, **dadurch gekennzeichnet, dass** er einen Antrieb umfasst.

5. Greifer nach einem der Ansprüche 1 bis 4, **dadurch gekennzeichnet, dass** das Rotationsteil (30, 50, 80) mit einem Unterdruckerzeuger verbindbar ist.

6. Greifer nach einem der Ansprüche 1 bis 5, **dadurch gekennzeichnet, dass** das Rotationsteil (30, 50, 80) mindestens eine Eingangsöffnung (65, 101, 102) umfasst, an welchem ein Unterdruck erzeugbar ist zum Festhalten des Werkstücks (90).

7. Greifer nach einem der Ansprüche 1 bis 6, **dadurch gekennzeichnet, dass** das Rotationsteil ein auswechselbares Aufnahmeelement (50) umfasst.

8. Greifer nach einem der Ansprüche 1 bis 7, **dadurch gekennzeichnet, dass** das Aufnahmeelement (50) entlang der Rotationsachse (x-Achse) des Rotationsteils verschiebbar gelagert ist und vorzugsweise mit Federmitteln (62) verbunden ist.

9. Greifer nach einem der Ansprüche 1 bis 8, **dadurch gekennzeichnet, dass** das Aufnahmeelement (50) um die Rotationsachse (x-Achse) rotierbar im Rotationsteil (30) aufgenommen ist.

10. Greifer nach einem der Ansprüche 1 bis 9, **dadurch gekennzeichnet, dass** das Aufnahmeelement (50) eine Hülse (51) mit einem mit einer Vertiefung (56) versehenen Kopf (55) aufweist.

11. Greifer nach einem der Ansprüche 1 bis 10, **dadurch gekennzeichnet, dass** das Aufnahmeelement (104) mindestens einen Fortsatz (100) aufweist zum Verbinden mit dem Werkstück, der vorzugsweise als Hülse ausgebildet ist.
